# EUROPEAN PATENT APPLICATION

(11) **EP 3 872 783 A2**
(43) Date of publication of application: **01.09.2021**
(21) Application number: 21184153.1
(22) Date of filing: 07.07.2021
(51) Int. Cl.: G08G 1/01, G08G 1/0967

(54) **RIGHT OF WAY DETERMINATION FOR VEHICLES IN A NARROW ROAD**

(30) Priority: 15.12.2020 CN 202011470155
(71) Applicant: Apollo Intelligent Connectivity (Beijing) Technology Co., Ltd., Beijing 100176 (CN)
(72) Inventor: WANG, Yawei, BEIJING, 100176 (CN); LEI, Yu, BEIJING, 100176 (CN)
(74) Representative: Brevalex

(57) **Abstract**

The present disclosure discloses a method and apparatus, an electronic device, a storage medium and a program product, and relates to the fields of intelligent transportation, electronic maps, cloud computing and cloud platforms. The method includes: determining, in a case where it is determined that there are a first vehicle and a second vehicle traveling toward each other in a target road section, a position of the first vehicle and a position of the second vehicle, wherein the target road section is a road section through which vehicles cannot pass in parallel; determining a target crossing place, according to road data of an electronic map as well as the position of the first vehicle and the position of the second vehicle; and instructing the first vehicle or the second vehicle to travel toward the target crossing place, according to a position of the target crossing place.

## Description

### TECHNICAL FIELD

The present disclosure relates to the technical field of computers, and in particular to the fields of intelligent transportation, electronic maps, cloud computing and cloud platforms.

### BACKGROUND

In consideration of economy and engineering difficulty, there are a large number of narrow roads with a single lane, on which two-way vehicles are difficult to pass each other, and either vehicle in one direction must make avoidance first. In most cases, because the field of view is limited, a driver cannot judge whether a vehicle traveling in a reverse direction exists in front of the road, and cannot judge the position and the number of the vehicles, so that the vehicle crossing avoidance cannot be done in time.

### SUMMARY

The present disclosure provides a vehicle dispatching method and apparatus, an electronic device and a storage medium.

According to an aspect of the present disclosure, there is provided a vehicle dispatching method, including:
determining, in a case where it is determined that there are a first vehicle and a second vehicle traveling toward each other in a target road section, a position of the first vehicle and a position of the second vehicle, wherein the target road section is a road section through which vehicles cannot pass in parallel;
determining a target crossing place, according to road data of an electronic map as well as the position of the first vehicle and the position of the second vehicle; and
dispatching the first vehicle or the second vehicle to travel toward the target crossing place, according to a position of the target crossing place.

According to another aspect of the present disclosure, there is provided a vehicle dispatching apparatus, including:
a first determination module configured for determining, in a case where it is determined that there are a first vehicle and a second vehicle traveling toward each other in a target road section, a position of the first vehicle and a position of the second vehicle, wherein the target road section is a road section through which vehicles cannot pass in parallel;
a second determination module configured for determining a target crossing place, according to road data of an electronic map as well as the position of the first vehicle and the position of the second vehicle; and
a dispatching module configured for dispatching the first vehicle or the second vehicle to travel toward the target crossing place, according to a position of the target crossing place.

According to another aspect of the present disclosure, there is provided an electronic device, the function of which may be implemented by hardware or by software executing a response by hardware. The hardware or software may include one or more modules corresponding to the function described above.

In one possible design, the structure of the electronic device includes a memory for storing programs supporting the electronic device to perform the above vehicle dispatching method and a processor configured for executing the programs stored in the memory. The electronic device may also include a communication interface for communicating with other devices or a communication network.

According to another aspect of the present disclosure, there is provided a non-transitory computer-readable storage medium storing computer instructions, which is used for storing computer software instructions used by the electronic device, the computer software instructions including programs for executing the vehicle dispatching method described above.

According to another aspect of the present disclosure, there is provided a computer program product, including computer programs which, when executed by a processor, cause the processor to perform the vehicle dispatching method.

In the present disclosure, because an electronic map is utilized, a nearest crossing place can be quickly found according to the positions of the first vehicle and the second vehicle traveling toward each other, thereby timely solving the problem of congestion caused by the fact that a narrow road cannot enable one vehicle to give another vehicle a right of way.

It should be understood that the content described in this section is neither intended to limit the key or important features of the embodiments of the present disclosure, nor intended to limit the scope of the present disclosure. Other features of the present disclosure will be readily understood through the following description.

### BRIEF DESCRIPTION OF THE DRAWINGS

The drawings are used to better understand the scheme and do not constitute a limitation to the present disclosure. In which:
FIG. 1 is a schematic diagram of an implementation process of a vehicle dispatching method according to an embodiment of the present disclosure;
FIG. 2 is a schematic diagram of an implementation process of a vehicle dispatching method according to another embodiment of the present disclosure;
FIG. 3 is a schematic diagram of an implementation process of a vehicle dispatching method according to another embodiment of the present disclosure;
FIG. 4 is a schematic diagram of an implementation process of a vehicle dispatching method according to another embodiment of the present disclosure;
FIG. 5 is a schematic diagram of an implementation process of a vehicle dispatching method according to another embodiment of the present disclosure;
FIG. 6 is a schematic diagram of an implementation process of a vehicle dispatching method according to another embodiment of the present disclosure;
FIG. 7 is a schematic diagram of an implementation process of a vehicle dispatching method according to another embodiment of the present disclosure;
FIG. 8 is a schematic diagram of an implementation process of a vehicle dispatching method according to another embodiment of the present disclosure;
FIG. 9 is a schematic diagram of an application of a vehicle dispatching method according to another embodiment of the present disclosure;
FIG. 10 is a schematic diagram of an implementation process of a vehicle dispatching method according to an embodiment of the present disclosure;
FIG. 11 is a schematic diagram of a structure of a vehicle dispatching apparatus according to an embodiment of the present disclosure; and
FIG. 12 is a block diagram of an electronic device used to implement the vehicle dispatching method according to an embodiment of the present disclosure.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

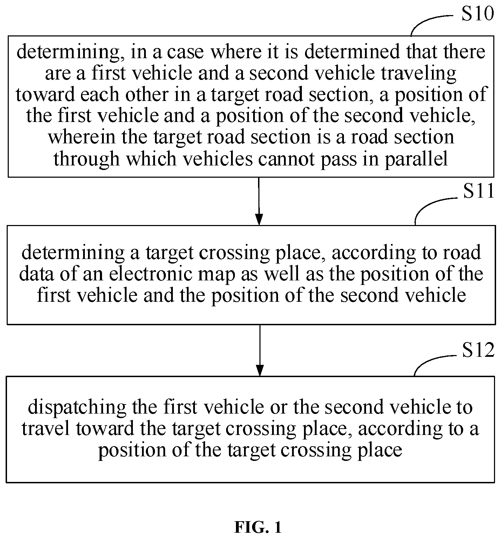

According to an embodiment of the present disclosure, as shown in FIG. 1, the embodiment of the present disclosure provides a vehicle dispatching method, including:

S10: determining, in a case where it is determined that there are a first vehicle and a second vehicle traveling toward each other in a target road section, a position of the first vehicle and a position of the second vehicle, wherein the target road section is a road section through which vehicles cannot pass in parallel.

The target road section may be understood as a road which is not wide enough for two vehicles in parallel to pass, and which can only for a single vehicle to pass and is not a unidirectional road. The target road section may include a low-grade road having a narrow field of view in a country, a mountain road, a narrow road in a city, a two-way traffic road having a field of view of less than 100 meters, a two-way traffic road on which a driver's sight is blocked by a building, etc. A two-way traffic road with driving safety and a two-way traffic road with traveling safety both may be considered as the target road section.

The first vehicle and the second vehicle traveling toward each other may be understood as a plurality of vehicles which face each other and travel in opposite directions. The first vehicle may be understood as one or more, and the second vehicle may be understood as one or more.

Whether there are the first vehicle and the second vehicle traveling toward each other in the target road section may be determined according to information such as the position, the traveling direction and the traveling speed of the vehicles. The determination may also be performed based on the planned traveling track of each vehicle in an area around the target road section.

The target road section may include a narrow road section where vehicles cannot enable one vehicle to give another vehicle a right of way, and may also include a road or intersection to which both ends of the narrow road section where the vehicles cannot enable one vehicle to give another vehicle a right of way are connected. That is, the determining whether there are the first vehicle and the second vehicle traveling toward each other in the target road section may be understood as determining whether vehicles traveling toward each other exist in a target road section or whether vehicles traveling toward each other are about to travel into the target road section.

The first vehicle and the second vehicle may be vehicles which are about to travel into the target road section or vehicles which have traveled into the target road section.

The positions of the first vehicle and the second vehicle can be determined by Global Positioning System (GPS) information fed back by a vehicle interior on-board unit or a mobile terminal of a user. The positions of the first vehicle and the second vehicle can also be determined by the position information fed back to a server by an electronic map, in a case where the first vehicle and the second vehicle are navigated by using the electronic map.

S11: determining a target crossing place, according to road data of an electronic map as well as the position of the first vehicle and the position of the second vehicle.

The road data of the electronic map may contain a target road section and road information within a preset range around the target road section, for example, the road widths of other road sections to which the target road section is connected, the road type of an area around the target road section, the occupied area of the area around the target road section, the shape of the area, etc. The target crossing place can be determined according to any one or more of the above road information as well as the position of the first vehicle and the position of the second vehicle.

The target crossing place may include parking zones on both sides of a road, parking lots, open areas, sidewalks or bikeways that may be for temporary parking, etc. As long as the temporary parking and the crossing of the vehicles can be realized, the crossing place can be used as the target crossing place.

S12: dispatching the first vehicle or the second vehicle to travel toward the target crossing place, according to a position of the target crossing place.

The specific vehicle to be dispatched can be selected according to the position of the target crossing place. For example, in a case where the target crossing place is relatively close to the first vehicle, the first vehicle is dispatched to travel to the target crossing place, thereby enabling the first vehicle to give the second vehicle a right of way between the second vehicle and the first vehicle. In a case where the target crossing place is relatively close to the second vehicle, the second vehicle is dispatched to travel to the target crossing place, thereby enabling the second vehicle to give the first vehicle a right of way between the second vehicle and the first vehicle.

With the popularity of motor vehicles, vehicles traveling on rural and mountain roads, in housing estates or on urban roads are rapidly increasing. In consideration of economy and engineering difficulty, a large number of narrow roads with a single lane exist, and respective vehicles traveling toward each other bidirectionally on the roads have difficulty and traveling danger in terms of passing each other. Once enough space is not available, one vehicle cannot give another vehicle a right of way, and one side must back, thus it not only needs coordination, but also travel time is greatly wasted. For the roads above, since the field of view is limited, a driver cannot judge the position and the number of incoming vehicles traveling in an opposite direction in the front, and does not know where enough space is available for the vehicles to pass each other on an unfamiliar road. According to the embodiment of the present disclosure, the advantage that the electronic map has super field of view relative to a driver is utilized, thus the nearest crossing place can be quickly found from the surrounding area of the target road section in the electronic map, according to the positions of the first vehicle and the second vehicle traveling toward each other, so that the problem of congestion caused by the fact that a narrow road cannot enable one vehicle to give another vehicle a right of way is solved timely, and the problem of not knowing where the crossing point exists in a case where a vehicle is traveling on a strange road is also solved effectively. The driver can be made to concentrate on driving the vehicle without worrying about an incoming vehicle from the opposite direction.

In an implementation, the executing subject for the vehicle dispatching method may be a server corresponding to an electronic map utilized by a vehicle. That is, the positions of respective vehicles in the same target road section is determined by a server utilizing the electronic map used in the navigation for the respective vehicles, and based on this, the vehicle dispatching is further performed according to data about roads around the target road section.

In an implementation, an executing subject for the vehicle dispatching method may be an on-board unit of any vehicle or a mobile terminal of an in-vehicle user. After the on-board unit of the first vehicle or the mobile terminal of a user in the first vehicle acquires the position of each vehicle in the same target road section by using real-time road network data (the real-time road network data can be acquired by an electronic map, or can also be acquired by road test equipment at the target road section), the vehicle dispatching can be performed according to the position of each vehicle and the data about roads around the target road section.

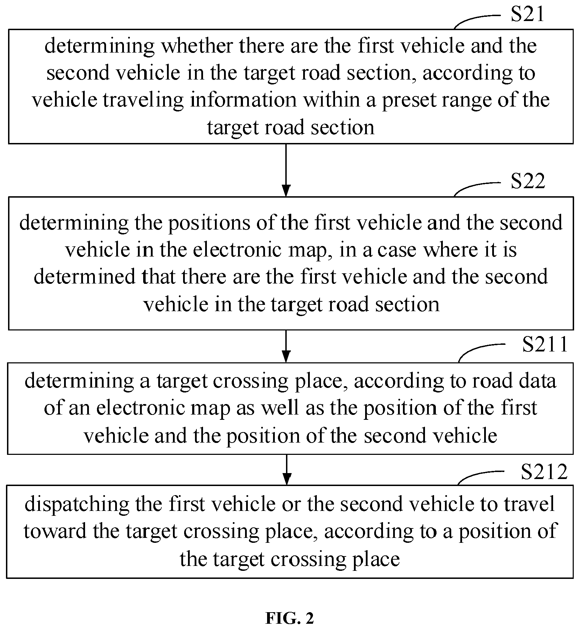

In an implementation, the vehicle dispatching method of the embodiment includes the above operations S10 to S12. As shown in FIG. 2, the operation S10: the determining, in a case where it is determined that there are the first vehicle and the second vehicle traveling toward each other in the target road section, the position of the first vehicle and the position of the second vehicle may further include:

S21: determining whether there are the first vehicle and the second vehicle in the target road section, according to vehicle traveling information within a preset range of the target road section.

The preset range of the target road section can be understood as in the target road section, in a road connected to two ends of the target road section, a road intersection corresponding to the target road section, and the like.

The vehicle travel information may include travel direction information for each vehicle, travel speed information for each vehicle, current position information for each vehicle, number of vehicles, the planned traveling track for each vehicle, and the like.

S22: determining the positions of the first vehicle and the second vehicle in the electronic map, in a case where it is determined that there are the first vehicle and the second vehicle in the target road section.

S211 and S212 shown in FIG. 2 are operations same as or similar to S11 and S12 shown in FIG. 1, respectively.

In the embodiment, whether a vehicle is about to travel to the target road section and whether two-way traveling vehicles exist in the target road section currently can be accurately predicted according to the vehicle traveling information within the preset range of the target road section.

In an example, the determining, in a case where it is determined that there are the first vehicle and the second vehicle traveling toward each other in the target road section, the position of the first vehicle and the position of the second vehicle may include:
determining whether each vehicle is about to travel to the target road section, according to the traveling direction information and the planned traveling track of each vehicle in the preset range of the target road section.

After the vehicles are determined to be vehicles that are about to travel to the target road section, it is further determined whether the first vehicle and the second vehicle traveling toward each other exist in the vehicles that are about to travel to the target road section.

In a case where the first vehicle and the second vehicle traveling toward each other exist, the positions of the first vehicle and the second vehicle traveling toward each other are determined.

In an example, the determining, in a case where it is determined that there are the first vehicle and the second vehicle traveling toward each other in the target road section, the position of the first vehicle and the position of the second vehicle may include:
determining whether a vehicle which is about to travel to the target road section and a vehicle which has traveled to the target road section exist, according to the traveling direction information and the planned traveling track of each vehicle in the preset range of the target road section.

After it is determined that the vehicle which is about to travel to the target road section and the vehicle which has traveled to the target road section exist, it is further determined whether the first vehicle and the second vehicle traveling toward each other exist among the vehicle which is about to travel to the target road section and the vehicle which has traveled to the target road section.

In a case where the first vehicle and the second vehicle traveling toward each other exist, the positions of the first vehicle and the second vehicle traveling toward each other are determined.

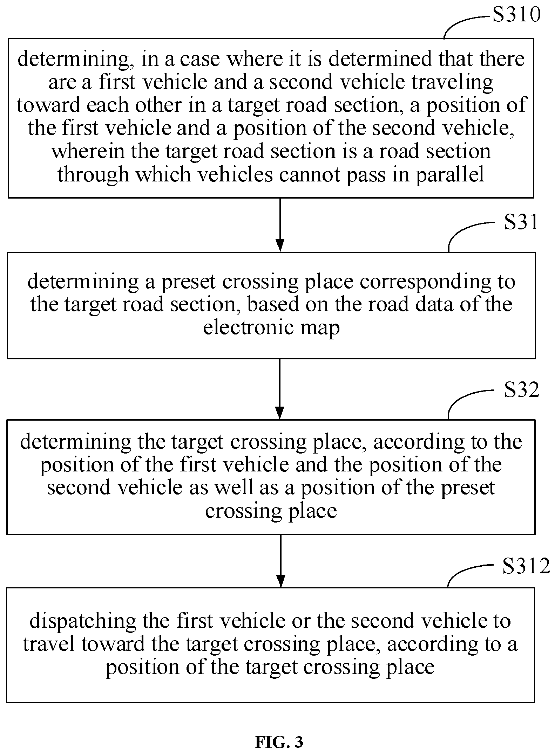

In an implementation, the vehicle dispatching method of the embodiment includes the above operations S10 to S12. As shown in FIG. 3, the operation S11: the determining the target crossing place, according to the road data of the electronic map as well as the position of the first vehicle and the position of the second vehicle may further include:

S31: determining a preset crossing place corresponding to the target road section, based on the road data of the electronic map.

The preset crossing place corresponding to the target road section can be confirmed in a manual active road sweeping mode and stored in the electronic map, and can also be actively marked in the electronic map by a driver after the crossing behavior.

The preset crossing place in the electronic map can be graded and marked, and the preset crossing place is graded according to indexes such as data sources, data updating time and the like. The preset crossing place with a high grade is safer and more reliable.

S32: determining the target crossing place, according to the position of the first vehicle and the position of the second vehicle as well as a position of the preset crossing place.

S310 and S312 shown in FIG. 3 are operations same as or similar to S10 and S12 shown in FIG. 1, respectively.

In the present embodiment, the target crossing place capable of implementing the dispatching of the first vehicle or the second vehicle can be quickly found by the preset crossing place in the electronic map, improving the vehicle passing efficiency of the target road section.

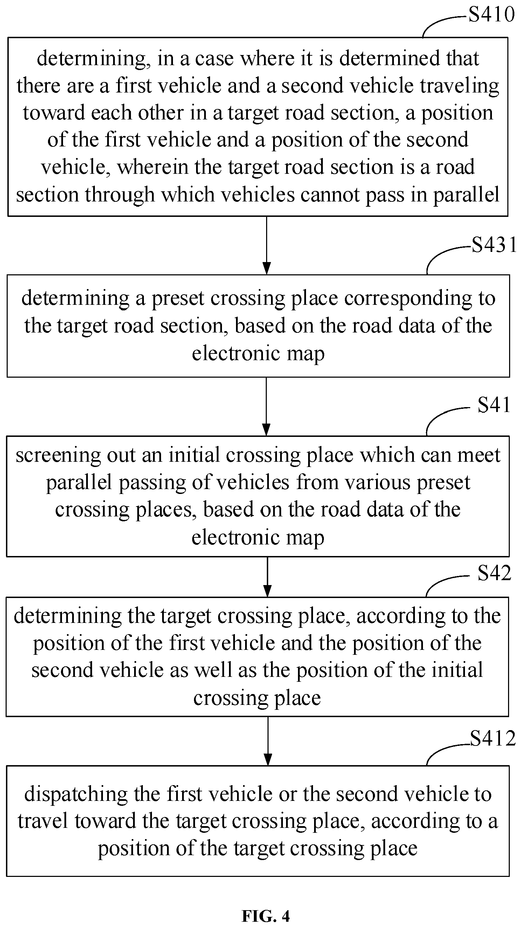

In an implementation, the vehicle dispatching method of the embodiment includes the above operations S310, S31, S32 and S312. As shown in FIG. 4, the operation S32: the determining the target crossing place, according to the position of the first vehicle and the position of the second vehicle as well as the position of the preset crossing place may further include:

S41: screening out an initial crossing place which can meet parallel passing of vehicles from various preset crossing places, based on the road data of the electronic map.

Because the road corresponding to the preset crossing place may have the problem of road maintenance or reconstruction or the like, the preset crossing place can be screened by the road data, so that the crossing place which is still effective currently can be accurately obtained.

The screening out the initial crossing place which can meet parallel passing of vehicles from various preset crossing places, based on the road data of the electronic map may specifically include:
determining whether the preset crossing place can meet the requirement of parallel passing of the vehicles traveling toward each other, according to information such as the occupied area of the position region of the preset crossing place, the corresponding road width and the like.

In a case where the requirement of parallel passing of the vehicles can be met, it is determined that the preset crossing place is still valid, and the preset crossing place can be taken as an initial crossing place.

S42: determining the target crossing place, according to the position of the first vehicle and the position of the second vehicle as well as a position of the preset crossing place.

S410, S431 and S412 shown in FIG. 4 are operations same as or similar to S310, S31 and S312 shown in FIG. 3, respectively.

In the embodiment, the effectiveness of the preset crossing place can be ensured by screening the preset crossing place, so that the condition that the vehicles are dispatched to a place where one vehicle cannot give another vehicle a right of way, to further deteriorate the congestion of the target road section, is avoided.

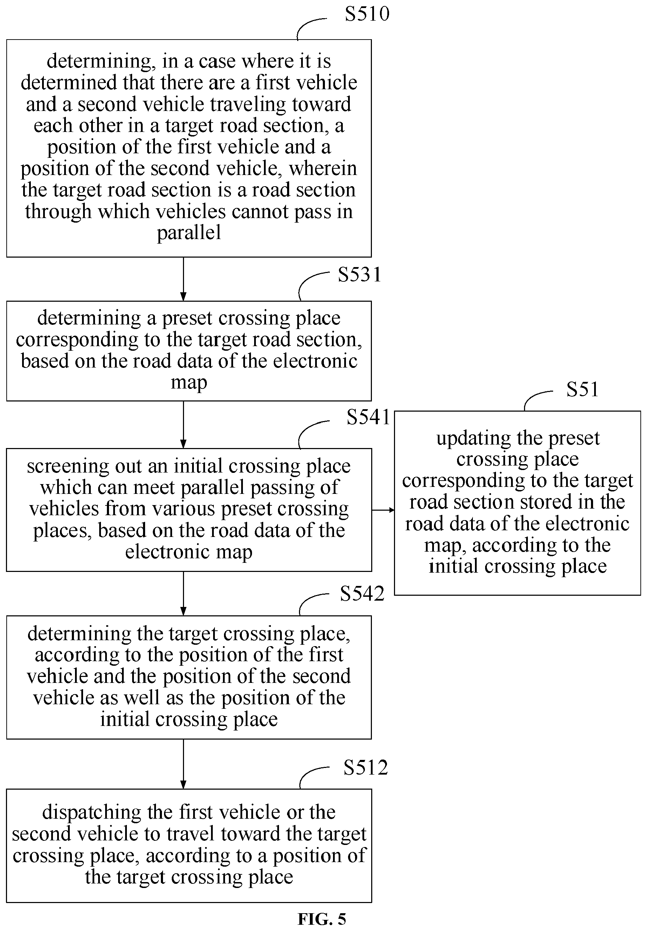

In an implementation, as shown in FIG. 5, the operation S32: the determining the target crossing place, according to the position of the first vehicle and the position of the second vehicle as well as the position of the preset crossing place may further include:

S51: updating the preset crossing place corresponding to the target road section stored in the road data of the electronic map, according to the initial crossing place. The preset crossing place where the parallel passing of the vehicles cannot be realized is deleted from the electronic map.

In the embodiment, the road data of the electronic map is updated according to the initial crossing place, so that the validity of the preset crossing place stored in the electronic map can be guaranteed.

S510, S531, S541, S542 and S512 shown in FIG. 5 are operations same as or similar to S410, S431, S41, S42 and S412 shown in FIG. 4, respectively.

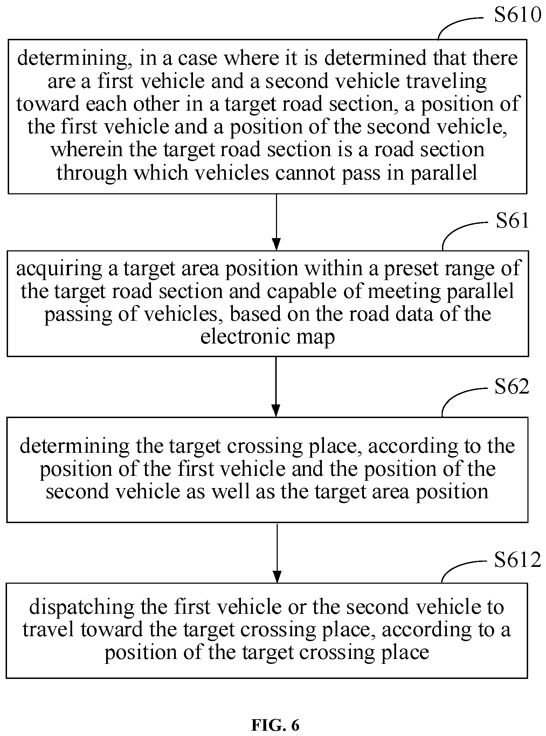

In an implementation, the vehicle dispatching method of the embodiment includes the above operations S10 to S12. As shown in FIG. 6, the operation S11: the determining the target crossing place, according to the road data of the electronic map as well as the position of the first vehicle and the position of the second vehicle may further include:

S61: acquiring a target area position within a preset range of the target road section and capable of meeting parallel passing of vehicles, based on the road data of the electronic map.

The target area location may include parking zones on both sides of the road, parking lots, open areas, sidewalks or bikeways that may be for temporary parking, etc. As long as the temporary parking of a vehicle and enabling one vehicle to give another vehicle a right of way can be realized, the crossing place can be used as the target area location.

S62: determining the target crossing place, according to the position of the first vehicle and the position of the second vehicle as well as the target area position.

S610 and S612 shown in FIG. 6 are operations same as or similar to S10 and S12 shown in FIG. 1, respectively.

In the embodiment, the target crossing place where the parallel passing of the vehicles can be performed may be quickly determined according to the road data in the electronic map.

In an example, the determining the target crossing place, according to the road data of the electronic map as well as the position of the first vehicle and the position of the second vehicle include:
determining, according to the road data of the electronic map, whether the road width of a road section connected with the target road section or the occupied area of the surrounding area meets the requirement that one vehicle gives another vehicle a right of way.

In a case where the road width or the occupied area of the surrounding area can meet the condition that two vehicles can pass in parallel, it can be determined as the target crossing place.

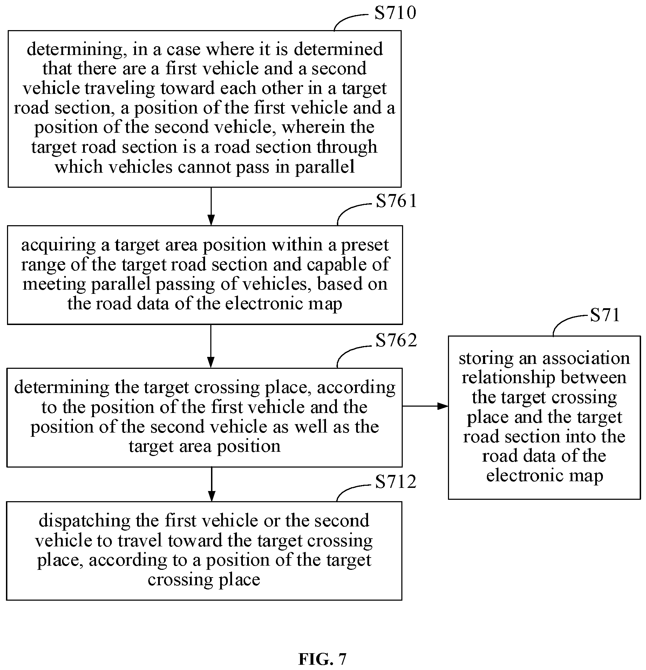

In an implementation, as shown in FIG. 7, the operation S11: the determining the target crossing place, according to the road data of the electronic map as well as the position of the first vehicle and the position of the second vehicle may further include:

S71: storing an association relationship between the target crossing place and the target road section into the road data of the electronic map. Therefore, the target crossing place serves as a preset crossing place of the target road section in the electronic map.

S710, S761, S762 and S712 shown in FIG. 7 are operations same as or similar to S610, S61, S62 and S612 shown in FIG. 6, respectively.

In the embodiment, in a case where a vehicle passes through the target road section again and it needs to enable one vehicle to give another vehicle a right of way, the target crossing place can be obtained directly from the electronic map, and the vehicle is dispatched to pass based on the target crossing place, so that the time for determining the target crossing place and the time for dispatching a vehicle to enable the vehicle to give other vehicle a right of way are reduced.

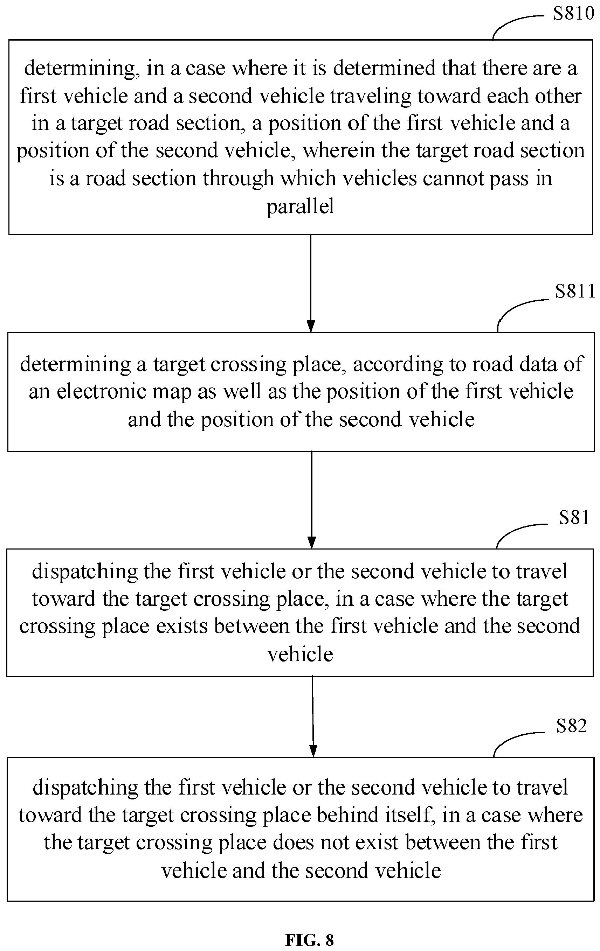

In an implementation, the vehicle dispatching method of the embodiment includes the above operations S10 to S12. As shown in FIG. 8, the operation S12: the dispatching the first vehicle or the second vehicle to travel toward the target crossing place, according to the position of the target crossing place includes:

S81: dispatching the first vehicle or the second vehicle to travel toward the target crossing place, in a case where the target crossing place exists between the first vehicle and the second vehicle; and

S82: dispatching the first vehicle or the second vehicle to travel toward the target crossing place behind itself, in a case where the target crossing place does not exist between the first vehicle and the second vehicle.

S810 and S811 shown in FIG. 8 are operations same as or similar to S10 and S11 shown in FIG. 1, respectively.

In the embodiment, according to the relative positions between the target crossing place and the first and second vehicles, the vehicle dispatching can be achieved more efficiently and reasonably.

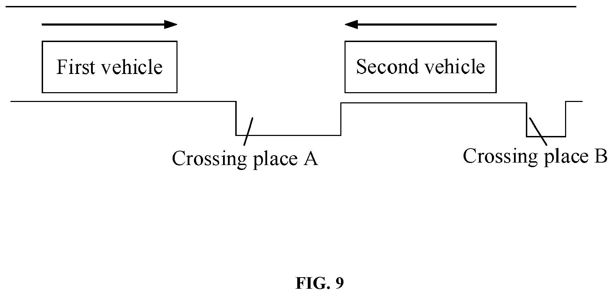

As shown in FIG. 9, in a case where there is a crossing place A between two vehicles, the crossing place A as centered as possible is taken as the target crossing place (this can be done as fairly and efficiently as possible). The first vehicle or the second vehicle is guided to travel forwards to the crossing place. In a case where there is no crossing place between two vehicles, a crossing place B closest to any of the two vehicles behind the two vehicles is found to serve as a target crossing place, and the second vehicle is guided to back to the crossing place B. In a case where a plurality of vehicles need to pass each other, crossing points of all opposite vehicles from near to far need to be calculated for each vehicle, and the crossing points are selected according to a two-vehicle passing method. In a case where there are a plurality of vehicles traveling in a single direction which are required to be moved to the target crossing place, it can be simplified to successively give other vehicle a right of way one by one. Only the nearest passing can be predicted, the number of times of passing to be generated can be prompted to a driver, and the second nearest passing can be guided in advance.

In an example, the vehicle dispatching method includes:

Step one: in a case where a vehicle enters a narrow road section, a mode of passing each other on a narrow road is started, and a map platform comprehensively collects the conditions of all vehicles entering the road section (also including vehicles which are about to enter the road section according to path planning), including the position, the direction and the speed of each vehicle;

Step two: the map platform comprehensively analyzes vehicle conditions, intelligently selects a crossing point for each vehicle, and guides the vehicle to reach the crossing point. The map platform actively improves the annotation of the crossing point, or annotates a position where historical vehicles pass each other as the crossing point. As long as the situation that opposite traveling vehicles exist on the road section, i.e., the demand that vehicles pass each other, exists, a crossing point is calculated. A calculation method includes: in a case where there is a crossing point between two vehicles, the crossing point as centered as possible is taken as a first recommended crossing point (this can be done fairly and efficiently as possible); in a case where there is no crossing point between two vehicles, a nearest crossing point behind the two vehicles is searched, the crossing point which is closest to any one of the two vehicles is taken as the first recommended crossing point, and the vehicle is guided to back to the crossing point; and in a case where a plurality of vehicles need to pass each other, crossing points of all opposite vehicles from near to far are calculated for each vehicle, and the crossing point is selected according to a two-vehicle passing method.

Step three: according to the selected crossing point, a driver is prompted how long before vehicles pass each other, and is guided to drive to the crossing point, to wait for passing;

Step four: that vehicles pass each other is ended; in a case where the front is still a narrow road, it moves to the step one, and the mode of passing each other is ended in a case where the vehicle leaves the narrow road.

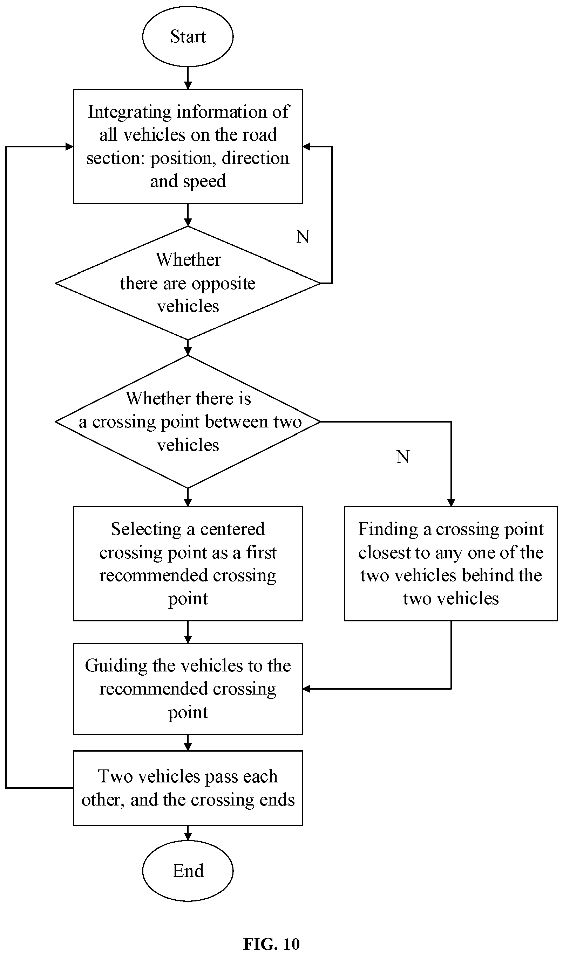

In an example, as shown in FIG. 10, an example flow diagram of an application of an embodiment of the present disclosure is shown. The vehicle dispatching method may include:
integrating information (position information, direction information and speed information) of all vehicles on the target road section, to judge whether opposite vehicles exist;
in a case where the opposite vehicles exist, judging whether a crossing point exists between two vehicles;
in a case where there is a crossing point between the two vehicles, selecting a centered crossing point as a first recommended crossing point (a target crossing point);
in a case where there is no crossing point between the two vehicles, finding a crossing point closest to any one of the two vehicles behind the two vehicles as a recommended crossing point (a target crossing point); and
guiding the vehicle to travel to the recommended crossing point. After the two vehicles pass each other, the vehicle dispatching method is ended.

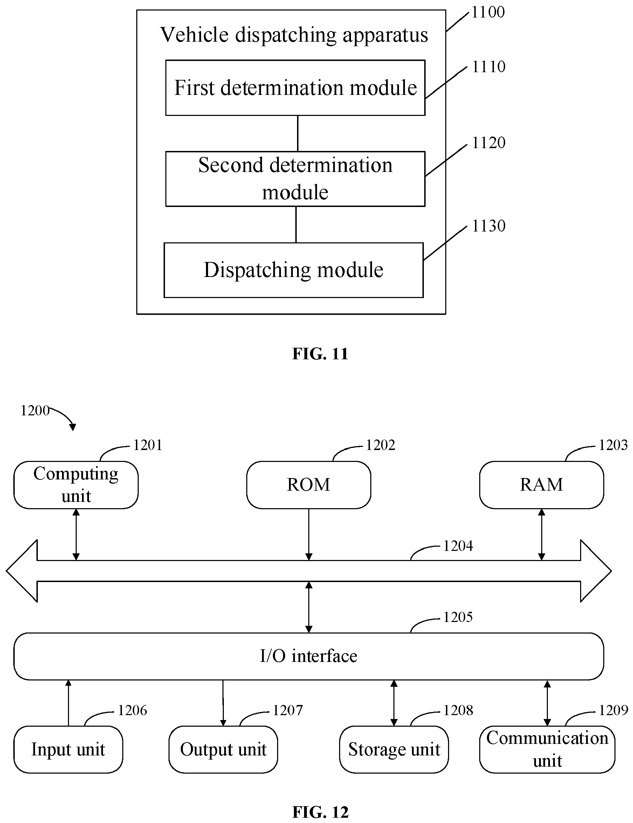

According to an embodiment of the present disclosure, as shown in FIG. 11, a vehicle dispatching apparatus 1100 is provided, which includes:
a first determination module 1110 configured for determining, in a case where it is determined that there are a first vehicle and a second vehicle traveling toward each other in a target road section, a position of the first vehicle and a position of the second vehicle, wherein the target road section is a road section through which vehicles cannot pass in parallel;
a second determination module 1120 configured for determining a target crossing place, according to road data of an electronic map as well as the position of the first vehicle and the position of the second vehicle; and
a dispatching module 1130 configured for dispatching the first vehicle or the second vehicle to travel toward the target crossing place, according to a position of the target crossing place.

In an implementation, the first determination module 1110 includes:
a first determination sub-module configured for determining whether there are the first vehicle and the second vehicle in the target road section, according to vehicle traveling information within a preset range of the target road section; and
a second determination sub-module configured for determining the positions of the first vehicle and the second vehicle in the electronic map, in a case where it is determined that there are the first vehicle and the second vehicle in the target road section.

In an implementation, the second determination module 1120 includes:
a third determination sub-module configured for determining a preset crossing place corresponding to the target road section, based on the road data of the electronic map; and
a fourth determination sub-module configured for determining the target crossing place, according to the position of the first vehicle and the position of the second vehicle as well as a position of the preset crossing place.

In an implementation, the fourth determination sub-module is configured for screening out an initial crossing place which can meet parallel passing of vehicles from various preset crossing places, based on the road data of the electronic map; and determining the target crossing place, according to the position of the first vehicle and the position of the second vehicle as well as the position of the initial crossing place.

In an implementation, the fourth determination sub-module is further configured for updating the preset crossing place corresponding to the target road section stored in the road data of the electronic map, according to the initial crossing place.

In an implementation, the second determination module 1120 includes:
an acquisition sub-module configured for acquiring a target area position within a preset range of the target road section and capable of meeting parallel passing of vehicles, based on the road data of the electronic map; and
a fifth determination sub-module configured for determining the target crossing place, according to the position of the first vehicle and the position of the second vehicle as well as the target area position.

In an implementation, the second determination module 1120 further includes:
an association sub-module configured for storing an association relationship between the target crossing place and the target road section into the road data of the electronic map.

In an implementation, the dispatching module 1130 includes:
a dispatching sub-module configured for dispatching the first vehicle or the second vehicle to travel toward the target crossing place, in a case where the target crossing place exists between the first vehicle and the second vehicle; and dispatching the first vehicle or the second vehicle to travel toward the target crossing place behind itself, in a case where the target crossing place does not exist between the first vehicle and the second vehicle.

The functions of the above vehicle dispatching apparatuses may refer to respective embodiments of the above vehicle dispatching method, and will not be described in detail herein.

According to embodiments of the present disclosure, the present disclosure also provides an electronic device, a readable storage medium and a computer program product.

FIG. 12 shows a schematic block diagram of an example electronic device 1200 that may be used to implement embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 12, the electronic device 1200 includes a computing unit 1201 that may perform various suitable actions and processes in accordance with computer programs stored in a read only memory (ROM) 1202 or computer programs loaded from a storage unit 1208 into a random access memory (RAM) 1203. In the RAM 1203, various programs and data required for the operation of the electronic device 1200 may also be stored. The computing unit 1201, the ROM 1202 and the RAM 1203 are connected to each other through a bus 1204. An input/output (I/O) interface 1205 is also connected to the bus 1204.

A plurality of components in the electronic device 1200 are connected to the I/O interface 1205, including: an input unit 1206, such as a keyboard, a mouse, etc.; an output unit 1207, such as various types of displays, speakers, etc.; a storage unit 1208, such as a magnetic disk, an optical disk, etc.; and a communication unit 1209, such as a network card, a modem, a wireless communication transceiver, etc. The communication unit 1209 allows the electronic device 1200 to exchange information/data with other devices over a computer network, such as the Internet, and/or various telecommunications networks.

The computing unit 1201 may be various general purpose and/or special purpose processing assemblies having processing and computing capabilities. Some examples of the computing unit 1201 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 1201 performs various methods and processes described above, such as the above vehicle dispatching method. For example, in some embodiments, the above vehicle dispatching method may be implemented as computer software programs that are physically contained in a machine-readable medium, such as the storage unit 1208. In some embodiments, some or all of the computer programs may be loaded into and/or installed on the electronic device 1200 via the ROM 1202 and/or the communication unit 1209. In a case where the computer programs are loaded into the RAM 1203 and executed by the computing unit 1201, one or more of steps of the above vehicle dispatching method may be performed. Alternatively, in other embodiments, the computing unit 1201 may be configured to perform the above vehicle dispatching method in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other. The server may be a cloud server, also called a cloud computing server or a cloud host, is a host product in a cloud computing service system, to solve the defects of high management difficulty and weak business expansibility in the traditional physical host and virtual private server (VPS) service. The server may also be a server of a distributed system, or a server incorporating a blockchain.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

## Claims

1. A vehicle dispatching method, comprising:
determining (S10), in a case where it is determined that there are a first vehicle and a second vehicle traveling toward each other in a target road section, a position of the first vehicle and a position of the second vehicle, wherein the target road section is a road section through which vehicles cannot pass in parallel;
determining (S11) a target crossing place, according to road data of an electronic map as well as the position of the first vehicle and the position of the second vehicle; and
dispatching (S12) the first vehicle or the second vehicle to travel toward the target crossing place, according to a position of the target crossing place.

2. The method of claim 1, wherein the determining (S10), in the case where it is determined that there are the first vehicle and the second vehicle traveling toward each other in the target road section, the position of the first vehicle and the position of the second vehicle, comprises:
determining (S21) whether there are the first vehicle and the second vehicle in the target road section, according to vehicle traveling information within a preset range of the target road section; and
determining (S22) the positions of the first vehicle and the second vehicle in the electronic map, in a case where it is determined that there are the first vehicle and the second vehicle in the target road section.

3. The method of claim 1 or 2, wherein the determining (S11) the target crossing place, according to the road data of the electronic map as well as the position of the first vehicle and the position of the second vehicle, comprises:
determining (S31) a preset crossing place corresponding to the target road section, based on the road data of the electronic map; and
determining (S32) the target crossing place, according to the position of the first vehicle and the position of the second vehicle as well as a position of the preset crossing place.

4. The method of claim 3, wherein the determining (S32) the target crossing place, according to the position of the first vehicle and the position of the second vehicle as well as the position of the preset crossing place, comprises:
screening out (S41) an initial crossing place which can meet parallel passing of vehicles from various preset crossing places, based on the road data of the electronic map; and
determining (S42) the target crossing place, according to the position of the first vehicle and the position of the second vehicle as well as the position of the initial crossing place,
optionally,
further comprising:
updating (S51) the preset crossing place corresponding to the target road section stored in the road data of the electronic map, according to the initial crossing place.

5. The method of claim 1, wherein the determining (S11) the target crossing place, according to the road data of the electronic map as well as the position of the first vehicle and the position of the second vehicle, comprises:
acquiring (S61) a target area position within a preset range of the target road section and capable of meeting parallel passing of vehicles, based on the road data of the electronic map; and
determining (S62) the target crossing place, according to the position of the first vehicle and the position of the second vehicle as well as the target area position,
optionally,
further comprising:
storing (S71) an association relationship between the target crossing place and the target road section into the road data of the electronic map.

6. The method of claim 1, wherein the dispatching (S12) the first vehicle or the second vehicle to travel toward the target crossing place, according to the position of the target crossing place, comprises:
dispatching (S81) the first vehicle or the second vehicle to travel toward the target crossing place, in a case where the target crossing place exists between the first vehicle and the second vehicle; and
dispatching (S82) the first vehicle or the second vehicle to travel toward the target crossing place behind itself, in a case where the target crossing place does not exist between the first vehicle and the second vehicle.

7. A vehicle dispatching apparatus (1100), comprising:
a first determination module (1110) configured for determining, in a case where it is determined that there are a first vehicle and a second vehicle traveling toward each other in a target road section, a position of the first vehicle and a position of the second vehicle, wherein the target road section is a road section through which vehicles cannot pass in parallel;
a second determination module (1120) configured for determining a target crossing place, according to road data of an electronic map as well as the position of the first vehicle and the position of the second vehicle; and
a dispatching module (1130) configured for dispatching the first vehicle or the second vehicle to travel toward the target crossing place, according to a position of the target crossing place.

8. The apparatus of claim 7, wherein the first determination module comprises:
a first determination sub-module configured for determining whether there are the first vehicle and the second vehicle in the target road section, according to vehicle traveling information within a preset range of the target road section; and
a second determination sub-module configured for determining the positions of the first vehicle and the second vehicle in the electronic map, in a case where it is determined that there are the first vehicle and the second vehicle in the target road section.

9. The apparatus of claim 7 or 8, wherein the second determination module comprises:
a third determination sub-module configured for determining a preset crossing place corresponding to the target road section, based on the road data of the electronic map; and
a fourth determination sub-module configured for determining the target crossing place, according to the position of the first vehicle and the position of the second vehicle as well as a position of the preset crossing place.

10. The apparatus of claim 9, wherein the fourth determination sub-module is configured for screening out an initial crossing place which can meet parallel passing of vehicles from various preset crossing places, based on the road data of the electronic map; and determining the target crossing place, according to the position of the first vehicle and the position of the second vehicle as well as the position of the initial crossing place,
optionally, wherein the fourth determination sub-module is further configured for updating the preset crossing place corresponding to the target road section stored in the road data of the electronic map, according to the initial crossing place.

11. The apparatus of claim 7, wherein the second determination module comprises:
an acquisition sub-module configured for acquiring a target area position within a preset range of the target road section and capable of meeting parallel passing of vehicles, based on the road data of the electronic map; and
a fifth determination sub-module configured for determining the target crossing place, according to the position of the first vehicle and the position of the second vehicle as well as the target area position,
optionally, wherein the second determination module further comprises:
an association sub-module configured for storing an association relationship between the target crossing place and the target road section into the road data of the electronic map.

12. The apparatus of claim 7, wherein the dispatching module comprises:
a dispatching sub-module configured for dispatching the first vehicle or the second vehicle to travel toward the target crossing place, in a case where the target crossing place exists between the first vehicle and the second vehicle; and dispatching the first vehicle or the second vehicle to travel toward the target crossing place behind itself, in a case where the target crossing place does not exist between the first vehicle and the second vehicle.

13. An electronic device, comprising:
at least one processor; and
a memory communicatively connected with the at least one processor, wherein
the memory stores instructions executable by the at least one processor, the instructions being executed by the at least one processor to enable the at least one processor to perform the method of any one of claims 1 to 6.

14. A non-transitory computer-readable storage medium storing computer instructions for enabling a computer to perform the method of any one of claims 1 to 6.

15. A computer program product comprising computer programs which, when executed by a processor, cause the processor to perform the method of any one of claims 1 to 6.
